# EUROPÄISCHE PATENTSCHRIFT

(11) **EP 3 307 589 B1**
(45) Veröffentlichungstag und Bekanntmachung des Hinweises auf die Patenterteilung: **10.04.2019**
(21) Anmeldenummer: 16738644.0
(22) Anmeldetag: 24.05.2016
(51) Int. Cl.: B60R 9/042, B60P 3/34, B60R 9/045

(54) **SCHWENKBARER LASTENTRÄGER**
PIVOTABLE LOAD CARRIER
PORTE-CHARGE PIVOTANT

(30) Priorität: 12.06.2015 AT 3722015; 15.03.2016 AT 1382016
(43) Veröffentlichungstag der Anmeldung: 18.04.2018
(73) Patentinhaber: Steinbacher, Sascha, 5522 St.Martin/Tgb. (AT)
(72) Erfinder: Steinbacher, Sascha, 5522 St.Martin/Tgb. (AT)
(74) Vertreter: Zoller, Markus
(86) Internationale Anmeldenummer: PCT/AT2016/000057
(87) Internationale Veröffentlichungsnummer: WO 2016/197159

(56) Entgegenhaltungen:
- FR-A- 1 286 059

## Beschreibung

Die Erfindung betrifft einen schwenkbaren Lastenträger, der insbesondere bei PKW-Anhängern und Faltcaravanen mit V-Deichsel, wie zum Beispiel der Cheroky von Trigano, zum Einsatz kommt und die verschiedenen Haltesysteme für zum Beispiel Fahrräder, Boote und Surfbretter, sowie Dachboxen und Gepäck aufnehmen soll. Die zurzeit bekannten Lastenträger für PKW-Anhänger und Faltcaravane, sind allesamt fix montiert und müssen zuerst immer abgeladen werden und dann umständlich zerlegt und abgebaut werden, bevor der darunterliegende, wie in diesem Fall beschriebene Faltcaravan, aufgebaut werden kann. Das ist natürlich, wie zum Beispiel beim Beladen oder für Zwischenübernachtungen, wie sie beim Campen häufiger vorkommen, sehr umständlich und zeitaufwändig.

Das Auf- und Abladen der zum Beispiel Fahrräder ist noch dazu meist sehr kraftaufwendig zu bewerkstelligen.

FR 1 286 059 A offenbart einen Anhänger gemäß dem Oberbegriff des Anspruchs 1.

Der Erfindung liegt demnach die Aufgabe zugrunde, der eingangs erwähnten Art der Lastenträger in Funktion und Handhabung zu verbessern, ohne dabei die Lasten abladen zu müssen.

Diese Aufgabe löst die Erfindung mit einem Anhänger mit den Merkmalen des Anspruchs 1.

Der auf einer Dreipunkt-Auflage basierende Lastenträger funktioniert durch die besondere Konstruktion eines ungleichschenkeligen Dreiecks als Trägerrahmen.

Dieser lässt es zu, dass der gesamte Trägerrahmen an der rechten hinteren Ecke vorbei zur Seite beziehungsweise nach vorne vorbei geschwenkt werden kann ohne vorher das Ladegut wie zum Beispiel Fahrräder abladen zu müssen.

Die Erfindung wird nun unter Bezugnahme auf ein Ausführungsbeispiel, welches nun in der Beschreibung und den Zeichnungen schematisch dargestellt wird, weiter erläutert.

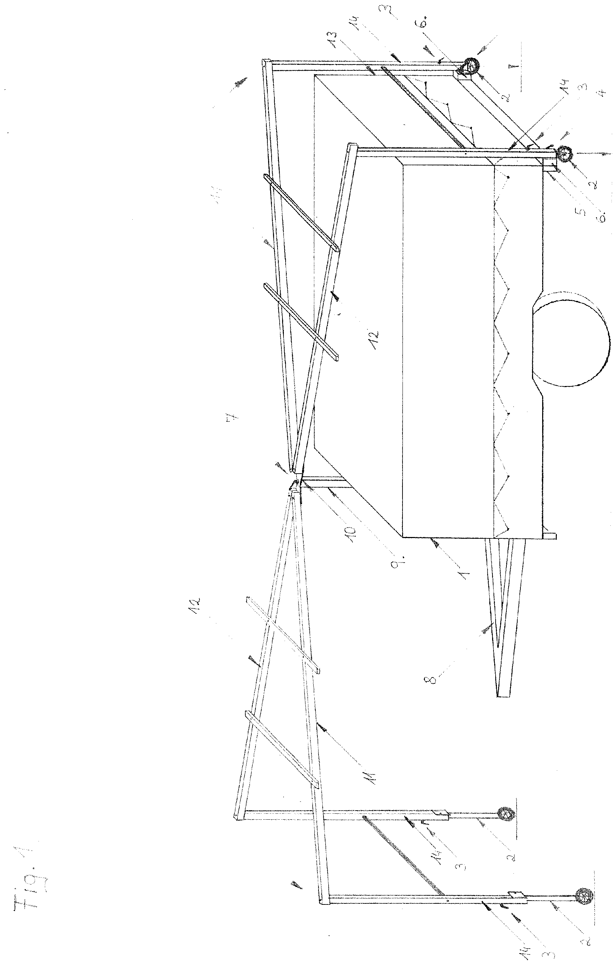

Fig. 1 zeigt in einer axonometrischen Darstellung des Lastenträgers, wie dieser über die hintere rechte Ecke zur Seite beziehungsweise nach vorne vorbei geschwenkt werden kann.

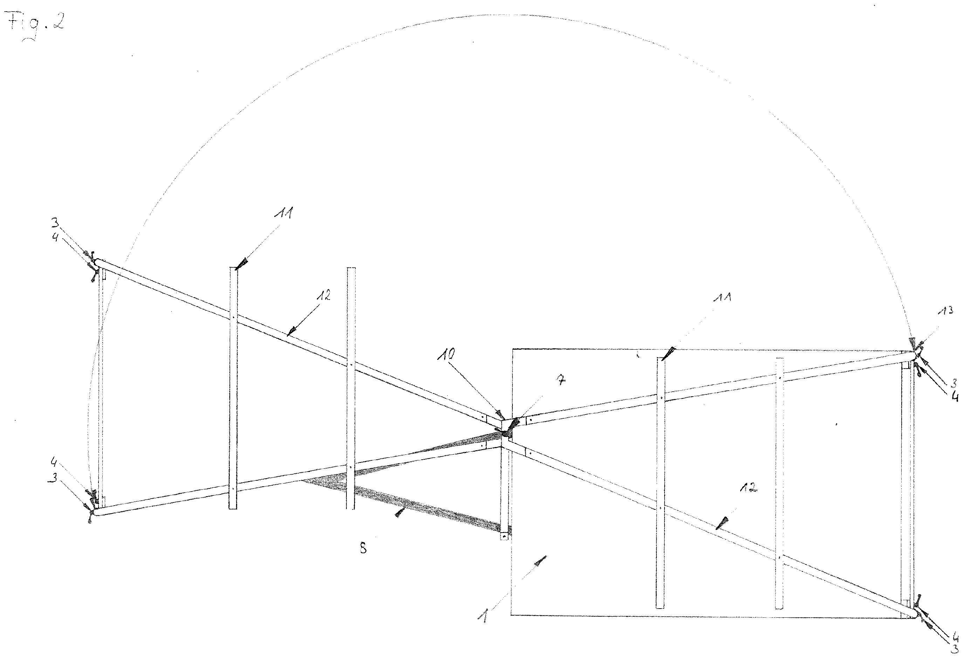

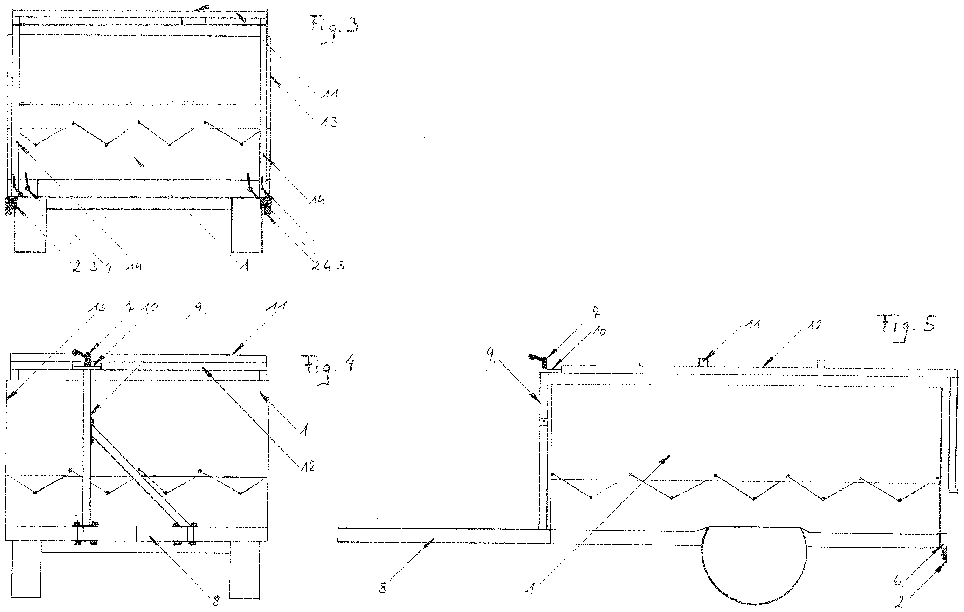

Fig. 2,3,4 und 5 zeigen Draufsicht, Rück-, Vorder- und Seitenansicht.

Sobald der Faltcaravan bzw. PKW-Anhänger 1 in Position gebracht ist, werden die Fallstützen 2 mit integrierten Rädern zu Boden gelassen. Dies wird mittels Handklemmschrauben 3, die die Stützen durch ein im Außenrohr 14 befindliches Gewinde in Position halten, bewerkstelligt. Nach dem Lockern der Handklemmschrauben 3 können die Stützen 2, welche einen Rohrdurchmesser aufweisen, der es zulässt, dass die Stützrohre 2 in das verwendete Außenrohr 14 passen, zu Boden gelassen werden und durch das erneute Anziehen der Handklemmschrauben 3 wird nun der gesamte Trägerrahmen 11 von den Fallstützen 2 mit integrierten Rädern gehalten.

Die am Hänger vormontierten Halterungen 6 weisen ebenfalls Gewinde auf, welche es ermöglichen den gesamten Trägerrahmen 11, mittels den angezogenen Handklemmschrauben 4, zu halten. Dies wird zusätzlich mit zwei kleinen Auflagenleisten links und rechts über den Halterungen 6 unterstützt, damit nicht das gesamte Gewicht der Konstruktion auf den Handklemmschrauben lastet. Dies ist im Fahrbetrieb notwendig, wenn die Fallstützen nicht zum Einsatz kommen.

Um nun weiter vorzugehen, werden die Handklemmschrauben 4, die in fix am Hängerrahmen 5 vormontierten Halterungen 6 befestigt sind, gelöst.
Die vormontierten Halterungen 6 nehmen das Gewinde für die Handklemmschrauben 4 in sich auf.

Dann wiederum wird die Handklemmschraube 7 gelöst. Diese befindet sich am vorderen auf der Deichsel 8 außermittig vormontierten Formrohr 9. Dieses außermittig angebrachte Formrohr 9 ermöglicht es, den Trägerrahmen 11 in einem ungleichschenkeligen Dreieck ausführen zu können.

Das zusätzliche um 180 Grad schwenkbare Gelenk 10 am oberen Ende des Formrohrs 9, wo eine Gewindemutter eingeschweißt ist, ermöglicht die Beweglichkeit des gesamten Trägerrahmens 11, welcher durch die Handklemmschraube 7 und die Handklemmschrauben 4 im Fahrbetrieb fixiert wird.

Dieses Gelenk 10 entsteht durch ein einfaches Loch im Trägerrahmen 11 und einer eingeschweißten Gewindemutter am oberen Ende des Formrohres 9 oder aber durch eine Rahmenkonstruktion in T-Form, die als Gelenk 10 dient und über das vormontierte Formrohr 9 gestülpt wird und durch eine Handklemmschraube 7 fixiert wird. Dieses Gelenk 10 kann ebenfalls zum Einsatz kommen, je nach Ausführungsform. In jedem Fall dient das Formrohr 9 als Hauptankerpunkt des gesamten Trägerrahmens 11 und wird daher extra stabil ausgeführt und mit einer zusätzlichen 45-Grad-Strebe zur gegenüberliegenden Seite der V-Deichsel 8 verstärkt. Dies ermöglicht es nun, durch Lockern der Handklemmschraube 7 am oberen Ende des Formrohrs 9, welches das Gelenk 10 fixiert, den gesamten Trägerrahmen 11 an der rechten hinteren Ecke 13 zur Seite beziehungsweise nach vorne vorbei zu schwenken. Das ist nur möglich, durch die besondere Bauweise der Dreipunkt-Auflage, die ein ungleichschenkeliges Dreieck des Trägerrahmens 11 entstehen lässt und den linken Schwenkarm 12 dadurch länger werden lässt. Durch diesen längeren Schwenkarm 12 und den beiden Fallstützen 2 mit integrierten Rädern, die nun das komplette Gewicht des Trägerrahmens 11 tragen, ist es nun möglich, dass der gesamte Trägerrahmen 11 inklusive Beladung an der hinteren rechten Ecke 13, durch das Gelenk 10 vorne am oberen Ende des Formrohrs 9, vorbei geschwenkt werden kann.

Da jetzt der Zugriff von oben in den Hänger beziehungsweise Faltcaravan gegeben ist, kann dieser ohne weitere Probleme aufgebaut werden.

## Patentansprüche

1. Anhänger (1) mit Lastenträger, insbesondere für PKW-Anhänger oder Faltcaravane, wobei der Anhänger (1) in Fahrtrichtung gesehen eine Vorder- und eine Rückseite aufweist, wobei an der Vorderseite eine Deichsel (8) und eine vertikale Formrohrhalterung (9) zur Aufnahme eines schwenkbaren Gelenks (10) vorgesehen sind, wobei an das schwenkbare Gelenk (10) ein Schwenkarm (12) angeformt ist, **dadurch gekennzeichnet, dass** die vertikale Formrohrhalterung (9) normal zur Fahrtrichtung gesehen exzentrisch zur Anhängermitte angeordnet ist und zwei unterschiedlich lange, sich über den Anhänger (1) erstreckenden, zueinander winkelig angeordnete Schwenkarme (12) aufweist deren eine Enden an dem schwenkbaren Gelenk (10) angeformt und deren andere Enden mit an der Rückseite des Anhängers (1) montierten Halterungen (6) lösbar verbunden sind, wobei sich eine Halterung (6) im Bereich der linken Ecke und die andere Halterung (6) im Bereich der rechten Ecke befindet.

2. Lastenträger nach Anspruch 1, **dadurch gekennzeichnet, dass** an den Enden der Schwenkarme (12) vertikale Außenrohre (14) angebracht sind.

3. Lastenträger nach Anspruch 2, **dadurch gekennzeichnet, dass** in die vertikalen Außenrohre (14) Fallstützen (2) mit integrierten Rädern eingeschoben sind und durch Handklemmschrauben (3) fixiert werden können.

4. Lastenträger nach Anspruch 3, **dadurch gekennzeichnet**, das die Fallstützen (2) passgenau in die Außenrohre (14) eingeschoben sind.

5. Lastenträger nach einem der Ansprüche 1 bis 4, **dadurch gekennzeichnet, dass** sich das schwenkbare Gelenk (10) durch eine Handklemmschraube (7) fixieren lässt.

6. Lastenträger nach einem der Ansprüche 1 bis 5, **dadurch gekennzeichnet, dass** das schwenkbare Gelenk (10) durch ein einfaches Loch in einem Trägerrahmen (11), der sich aus den Schwenkarmen (12) und etwaigen Versteifungen zusammensetzt, und einer eingeschweißten Gewindemutter in der Formrohrhalterung (9) gebildet wird.

7. Lastenträger nach einem der Ansprüche 1 bis 6, **dadurch gekennzeichnet, dass** die Außenrohre (14) mit Handklemmschrauben (4) an den Halterungen (6) fixiert werden.

8. Lastenträger nach einem der Ansprüche 1 bis 7, **dadurch gekennzeichnet, dass** die Halterungen (6) am Anhängerrahmen (5) montiert sind.

9. Lastenträger nach einem der Ansprüche 1 bis 8, **dadurch gekennzeichnet, dass** sich kleine Auflageleisten an den beiden Halterungen (6) befinden, die das Gewicht des Trägerrahmens (11) aufnehmen.

10. Lastenträger nach einem der Ansprüche 1 bis 9, **dadurch gekennzeichnet, dass** die Deichsel (8) V-förmig ist und die Formrohrhalterung (9) auf dieser befestigt ist.

## Claims

1. Trailer (1) with load carrier, in particular for car trailers or pliable caravans, wherein the trailer (1) seen in the direction of travel has a front and a back, wherein at the front a drawbar (8) and a vertical form tube support (9) for receiving a pivotable joint (10) are provided, wherein on the pivotable joint (10) a pivot arm (12) is formed, **characterized in that** the vertical form tube support (9) seen normal to the direction of travel is arranged eccentrically to the trailer centre and has two pivot arms (12) of different lengths, themselves extending over the trailer (1), mutually angularly arranged, the one ends of which are integrally formed on the pivotable joint (10) and the other ends of which are detachably connected to brackets (6) mounted on the rear of the trailer (1), wherein there is a holder (6) in the area of the left corner and the other holder (6) in the area of the right corner.

2. Load carrier according to claim 1, **characterized in that** at the ends of the pivot arms (12) vertical outer tubes (14) are mounted.

3. Load carrier according to claim 2, **characterized in that** in the vertical outer tubes (14) drop supports (2) are inserted with integrated wheels and can be fixed by hand clamping screws (3).

4. Load carrier according to claim 3, **characterized in that** the drop supports (2) are inserted fitting into the outer tubes (14).

5. Load carrier according to one of claims 1 to 4, **characterized in that** the pivotable joint (10) can be fixed by a hand clamping screw (7).

6. Load carrier according to one of claims 1 to 5, **characterized in that** the pivotable joint (10) is formed by means of a simple hole in a support frame (11), which consists of the pivot arms (12) and any stiffeners, and a welded threaded nut in the form tube support (9).

7. Load carrier according to one of claims 1 to 6, **characterized in that** the outer tubes (14) are fixed on the brackets (6) by hand clamping screws (4).

8. Load carrier according to one of claims 1 to 7, **characterized in that** the holders (6) are mounted on the trailer frame (5).

9. Load carrier according to one of claims 1 to 8, **characterized in that** there are small support strips on the two brackets (6) which receive the weight of the support frame (11).

10. Load carrier according to one of claims 1 to 9, **characterized in that** the drawbar (8) is V-shaped and the form tube support (9) is fixed thereto.

## Revendications

1. Remorque (1) avec porte-charge, en particulier pour remorque de voiture ou caravane pliante, dans laquelle la remorque (1) vue dans le sens de la marche présente une partie avant et une partie arrière, dans laquelle une partie avant (8) et un support de tube formé (9) vertical destinés à recevoir une articulation pivotante (10) sont prévus, dans laquelle un bras pivotant (12) est formé sur l'articulation pivotante (10), **caractérisé en ce que** le support de tube formé vertical (9) vu perpendiculairement au sens de la marche est disposé de manière excentrique par rapport au centre de la remorque et à deux bras de pivotement (12) de longueurs différentes s'étendant au-dessus de la remorque (1), agencés de manière anguleuse l'un envers l'autre, dont les unes extrémités sont formées sur l'articulation pivotante (10) de manière intégrées et dont les autres extrémités sont connectés de manière amovible sur des supports (6) montés à l'arrière de la remorque (1), un support (6) se trouvant dans la zone du coin gauche et l'autre support (6) se trouvant dans la zone du coin droit.

2. Porte-charge selon la revendication 1, **caractérisé en ce que** des tubes extérieurs verticaux (14) sont montés aux extrémités des bras de pivotement (12).

3. Porte-charge selon la revendication 2, **caractérisé en ce que** dans les tubes extérieurs verticaux (14), des supports de chute (2) sont insérés avec des roues intégrées et peuvent être fixés à l'aide de vis de serrage à la main (3).

4. Porte-charge selon la revendication 3, **caractérisé en ce que** les supports de chute (2) sont insérés avec précision dans les tubes extérieurs (14).

5. Porte-charge selon l'une des revendications 1 à 4, **caractérisé en ce que** l'articulation pivotante (10) peut être fixée à l'aide d'une vis de serrage manuelle (7).

6. Porte-charge selon l'une quelconque des revendications 1 à 5, **caractérisé en ce que** l'articulation pivotante (10) traverse un simple trou dans un cadre de support (11) constitué des bras de pivotement (12) et de tout raidisseur, ainsi que d'un écrou fileté soudé qui est formé dans le support de tube formé vertical (9).

7. Porte-charge selon l'une des revendications 1 à 6, **caractérisé en ce que** les tubes extérieurs (14) sont fixés à l'aide de vis de serrage à la main (4) sur les consoles (6).

8. Porte-charge selon l'une quelconque des revendications 1 à 7, **caractérisé en ce que** les supports (6) sont montés sur le châssis de la remorque (5).

9. Porte-charge selon l'une quelconque des revendications 1 à 8, **caractérisé en ce que** les deux consoles (6) comportent de petites bandes de support qui supportent le poids du cadre de support (11).

10. Porte-charge selon l'une quelconque des revendications 1 à 9, **caractérisé en ce que** le timon (8) est en forme de V et que le support de tube formé (9) y est fixé.
